# EUROPEAN PATENT APPLICATION

(11) **EP 2 666 923 A2**
(43) Date of publication of application: **27.11.2013**
(21) Application number: 13167861.7
(22) Date of filing: 15.05.2013
(51) Int. Cl.: E04C 2/292

(54) **A fastening system for walls**

(30) Priority: 22.05.2012 FI 20125536
(71) Applicant: Paroc Oy Ab, 00180 Helsinki (FI)
(72) Inventor: Nordström, Kjell, 21600 Parainen (FI); Karlsson, Niklas, 21600 Pargas (FI); Karlsson, Dick, 21600 Parainen (FI); Rantakylä, Kari, 20540 Turku (FI)
(74) Representative: LEITZINGER OY

(57) **Abstract**

A fastening arrangement for fastening a sandwich panel (1) to joists (5) or corresponding frame parts. The fastening arrangement comprises at least one plate (3, 3', 3", 3"') having at least one slot (7), the plate being fixedly joinable to the surface (2) of a sandwich panel (1), and at least one profile element (4, 4', 4", 4"') having at least one locking member (8) fitting into the slot (7) of the plate, the profile element being fixedly joinable to joists or corresponding frame part, wherein, when the locking members of the profile element have been inserted in the slots of the plate, said plate and said profile element are mutually movable in relation to each other in the longitudinal direction of the slots, whereas their mutual movement perpendicularly to the main surface of the plate is restricted or essentially entirely hindered.

## Description

### Object of the invention

The object of the invention is a fastening arrangement, especially for fastening sandwich panels to joists or corresponding frame parts.

The object of the invention is also a sandwich panel comprising at least one insulating layer of thermal insulation material.

Furthermore, the object of the invention is a wall section comprising at least one sandwich panel according to the invention and being fastened in joists or a corresponding frame part.

### Prior art

In order to, especially in outer walls, prevent sandwich elements from bending out from joists or other frame part due to temperature changes and wind suction, it is common practice to fasten sandwich panels in the joists or frame part by means of fastening screws penetrating the sandwich element. This method does, however, not take into account curvature or deformation of the floor caused by, for example, varying load on the floor. This can lead to deformations in the sandwich panel (e.g., a mineral wool panel having a mineral wool core between two shells of sheet metal) and its shell. Moreover, fastening screws penetrating the sandwich element constitute a risk for heat leakage and can at the same time disturb the overall aesthetical impression.

### Brief description of the invention

In order to avoid the above mentioned problems in the prior art, the fastening arrangement according to the invention is characterized in that it comprises at least one plate having at least one slot, the plate being fixedly joinable to the surface of a sandwich panel, and at least one essentially L-shaped profile element having at least one locking member fitting into the slot of the plate, the profile element being fixedly joinable to joists or a corresponding frame part, wherein, when the locking members of the profile element have been inserted in the slots of the plate, said plate and said profile element are mutually movable in relation to each other in the longitudinal direction of the slots, whereas their mutual movement perpendicular to the main surface of the plate is restricted or essentially entirely hindered.

The slots on the plate can be open or closed.

The expression "closed slot" or "closed slots" should in this invention be understood as slots allowing removal of locking means placed therein in their longitudinal direction only. The expression "open slot" or "open slots" should in this invention be understood as slots allowing removal of locking means placed therein not only in their longitudinal direction but also in at least one direction in a plane perpendicular to the longitudinal direction of the slots, for instance such that a plate, having open slots, and a profile element parallel to each other and perpendicular to the longitudinal direction of the slots from one direction can be brought to and locked against each other and in the opposite direction released from each other as long as the plate and the profile element not are attached to any other objects such as the joists or sandwich panel.

When being closed, the slots preferably consist of, for example, T-slots or dovetail slots. In a preferred embodiment, when the slots are open, the slots as well as the locking members show in the longitudinal direction thereof an essentially L-shaped cross-section.

In a preferred embodiment of the fastening arrangement of the invention, the plate is on the rear side thereof provided with glue or double-sided tape being protected by a removable protection material (e.g., protection paper).

In a preferred embodiment of the fastening arrangement of the invention, the profile element is essentially L-shaped. The profile element may also be essentially J-shaped provided that the locking members thereof form L-profiles in cross-section.

The sandwich element according to the invention is characterized in that on top of one surface of said sandwich panel is fixed at least one plate having at least one slot, said plate being intended for fastening the sandwich panel by means of a profile element having at least one locking member fitting into the slot of the plate, the profile element being fixedly joinable to joists or a corresponding frame part by use of screws or corresponding fastening members, wherein said plate and said profile element essentially lock the sandwich panel in place perpendicular to the surface of the sandwich panel due to their mutual movement perpendicularly to the main surface of the plate being limited or essentially entirely hindered, but allow shifting of the sandwich panel in relation to the joist or corresponding frame part in the longitudinal direction of the slots.

In the sandwich element of the invention, the slots of the plate are closed or open. When being closed, the slots of the plate are preferably T-slots or dovetail slots, for example. In a preferred embodiment, when the slots are open, the slots as well as the locking members show in the longitudinal direction thereof an essentially L-shaped cross-section.

In a preferred embodiment of the sandwich panel according to the invention, the plate is fixed to the surface of the sandwich panel by means of glue or double-sided tape. The plate may additionally be fixedly joined to the surface of the sandwich panel by use of rivets or other corresponding fastening members being able to penetrate the shell or surface layer of the panel. The slots of the plate are, for instance, T-slots or dovetail slots.

In a preferred embodiment of the sandwich element of the invention, the profile element is essentially L-shaped. The profile element may also be essentially J-shaped, provided that the locking members thereof form L-profiles in cross-section.

In a preferred embodiment of the sandwich element of the invention, the sandwich element comprises only one insulating layer of a thermal insulation material. This insulating layer consists of mineral wool and is placed between two shells of sheet metal and is fixedly joined to these. Instead of mineral wool as thermal insulation material in the insulating layer(s) can any other insulating material having a lambda value (λ-value) of, for example, less than 0.1 W/(m*K), be employed as well.

The wall section according to the invention comprises at least one sandwich panel according to any one of the claims 7-14, the sandwich panel being fastened in joists or a corresponding frame part, such that each plate through the slots therein is connected to a profile element having at least one locking member fitting into the slots of the plate, the profile element being fixed to joists or a corresponding frame part, whereby said plate and said profile element essentially lock the sandwich panel in place perpendicularly to the surface of the sandwich panel due to their mutual movement perpendicular to the main surface of the plate being restricted or essentially completely hindered but allow shifting of the sandwich panel in relation to the joists or corresponding frame part in the longitudinal direction of the slots.

In a preferred embodiment of the wall section according to the invention, the slots extend in their longitudinal direction essentially vertically and thereby enable vertical shifting of a floor construction in relation to the wall section.

In the invention, the amount of plates having slots per sandwich element is at least one. If only one plate is used, this can extend like a band over one of the surface layers (e.g., a surface metal sheet) over the entire width or length of the sandwich panel. The plate can also be considerably shorter. When several plates are used, these can be arranged on even distances from each other in a line extending over the entire surface of the sandwich panel. The plates can also be arranged in groups of, for instance, three plates, such that the mutual distance between the plates within a group is equal to the distance between each group is equal to but longer than the distance between the mutual distance between the plates within a group. The slots in the plates are preferably longer than the locking members of the essentially L-shaped profile elements, such that these, in case of vertical shifting of, for example, the floor, not are threaded out of the slots of the plates.

As already brought forth above, it is in the invention preferred that, when the slots are open, the slots as well as the locking members show in the longitudinal direction thereof an essentially L-shaped cross-section. The advantage of this embodiment is that one achieves a fastening of sandwich panels being outwards flexible approximately 5 mm. The plate and the profile element thereby locks the sandwich panel essentially in place vertically to the surface of the sandwich panel do to their mutual movement perpendicularly to the main surface of the plate being restricted, such that an approximately 5 mm movement of the sandwich panels outwards from the framework is allowed at the fastening points. For the construction (i.e., wall or roof), this means in practice that the loads being caused by deformation of the panels originating in the temperature difference between the outer and inner side of the panels decreases. To which extent depends on span (panel length) and panel thickness. It can approximately be around 1 kN/m per edge of the joists, i.e., 100 kg of load per meter. For the element this means that it either lasts without buckling (brake) or gets buckled. It is to be noted that a normal wind load is only 0.6 kN/m² when the building is approximately 10 m high in Finland and Sweden, consequently it is of great importance.

Moreover, the above described embodiment makes it possible to manufacture only one tool for the plate as well as for the preferably essentially L-shaped profile element (being bent by an element corresponding to the plate) and not two as in use of T-slots or dovetail slots.

Fastening of sandwich panels is achieved by means of the invention, for example, sandwich panels comprising a mineral wool core between two shells of sheet metal, the fastening being flexible in vertical direction but essentially locking the sandwich panel in place perpendicular to the surface of the sandwich panel due to the mutual movement of said plate and said profile element perpendicularly to the main surface of the plate being restricted or essentially entirely hindered (prevents the sandwich panel from being bent out from joists or corresponding frame part). The fastening can be used for fastening of single-span panels as well as multi-span panels to intermediate supports (pillars and beams) without fastening screws penetrating the sandwich panels.

The term "sandwich panel" should in the present invention be understood as, among other things, multilayer roof and wall facade panels, as well as multilayer ceiling and inside wall panels comprising at least one layer of insulating material. Sandwich panels consisting of a core of mineral wool placed between and fixed to two surface layers or shells of thin sheet metal can be mentioned as examples of such sandwich panels. The components of a sandwich panel are preferably bound to each other such that they form a supporting composite panel (composite element). The sandwich panel of the present invention must also fulfill certain minimum values of tensile strength and compression strength in order to avoid separation of the different layers therein when the tendency of the sandwich panel to get buckled is counteracted by the fastening arrangement of the invention.

### Detailed description of the invention by use of examples

The invention is in the following described in more detail by use of examples with reference to enclosed drawings, wherein:
- in Figure 1: is presented a schematic perspective drawing of an embodiment of the plate and the profile element in a fastening arrangement according to the invention, wherein the slots of the plate are closed,
- in Figure 2: is presented a schematic perspective drawing of an embodiment of a wall section of the invention being fastened in joists,
- in Figure 3: is presented a schematic perspective drawing of another embodiment of the plate and the profile element in a fastening arrangement according the invention, wherein the slots of the plate are open,
- in Figure 4: is presented a schematic view of a fastening arrangement according to Figure 3 from below,
- in Figure 5: is presented a schematic side view of a fastening arrangement of Figure 3,
- in Figure 6: is presented a schematic side view of another embodiment of a wall section according to the invention comprising a multi-span panel fastened in a pillar, and
- in Figure 7: is shown in cross-section from above how the wall section of Figure 6 is fastened in the pillar.

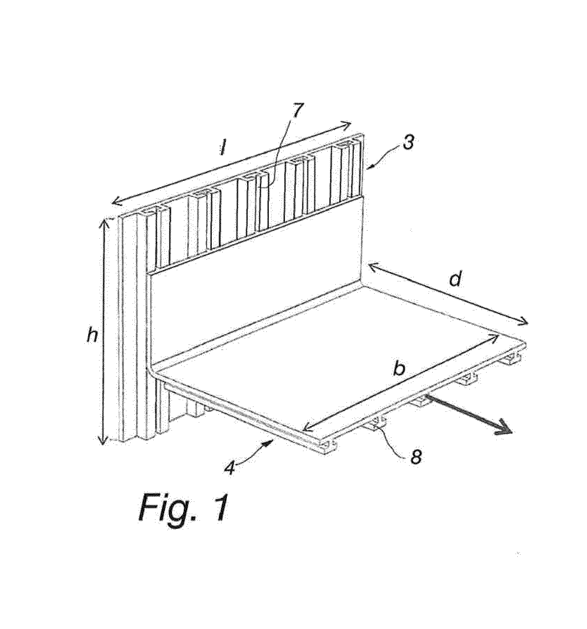

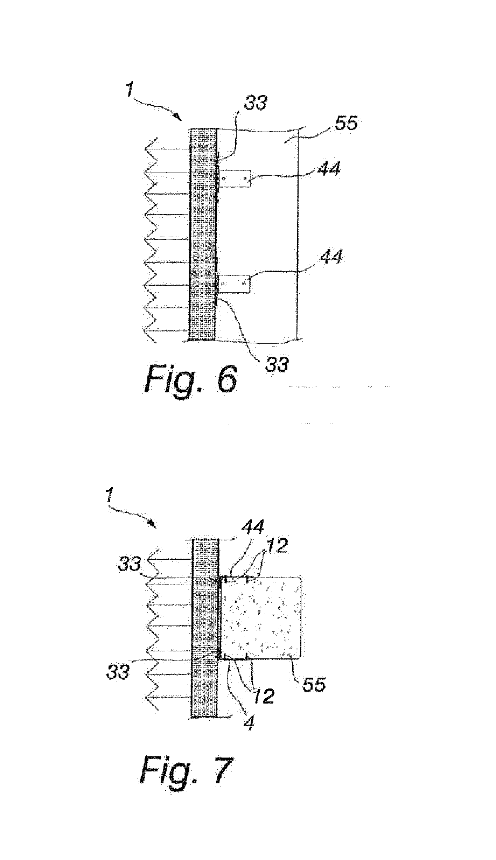

Figure 7 discloses an embodiment of a flexible fastening arrangement according to the invention for, e.g., Paroc's light sandwich panels, the fastening arrangement utilizing the high tensile strength and compression strength of these panels (see Table 1 below for examples of minimum values). The fastening arrangement comprises a plate 3 having five identical parallel T-slots 7, and an essentially L-shaped profile element 4 with five identical locking means 8, being in cross-section T-shaped as to be threaded into the slots 7 in order to essentially disable all other mutual movement between the plate 3 and the profile element 4, with the exception of a mutual shifting of the plate with respect to the profile element in the longitudinal direction of the slots 7. In the example of Figure 1, the slots are placed on equal distance from one another, but they can also be placed on varying distances from one another. In Figure 1 is the essentially L-shaped profile element 4 provided with locking means 8 on the outer surface of the shorter as well as the longer branch of the L, but it is in principle sufficient with a locking member on the outer surface of only one of the branches, and then preferably on the shorter branch.

**Table 1. Examples of minimum values of tensile strength and compression strength in a sandwich panel according to the invention**

| Example of minimum value of tensile strength | Example of minimum value of compression strength |
|---|---|
| kN/m² | kN/m² |
| 100 | 40 |

In Figure 1, the slot 7 of the plate 3 shows a T-profile in cross-section, but the slots 7 could, for example, alternatively be so called dovetail slots, whereby the locking means of the profile element would be so formed as to have a corresponding cross-section in order to essentially disable all other mutual movement between the plate 3 and the profile element 4 but a mutual shifting of the plate in relation to the profile element in the longitudinal direction of the slots 7. In Figure 1, the amount of slots 7 in the plate 3 and locking means 8 in the profile element is five, but the amount can, depending on the dimension of the plate, also be different, e.g. 1-10 slots per plate. The plate 3 and the profile element 4 are preferably independently manufactured in one piece by means of extrusion of a suitable metal, such as, steel or aluminum, into a desired form.

The fastening arrangement of Figure 1 can, for instance, be used for fastening sandwich panels to intermediate joists being exposed to a risk of deformation due to load. The plate 3 and profile element 4 of the fastening arrangement are then installed such that the slots 7 of the plate in the longitudinal direction thereof are vertical. A fastening of the sandwich panel is thereby achieved, wherein the fastening is vertically flexible but horizontally locked (prevents the sandwich panel from being bent out from joists or other frame part). The plate 3 with slots 7 of the fastening arrangement is glued onto the surface of the panel, the locking members 8 of the profile element 4 are threaded into the slots of the plate and anchored to joists or other frame part, such as, a pillar or beam. The fastening arrangement can also be used to fasten multi-span panels to intermediate supports (pillars and beams) without use of penetrating fastening screws. In order for the fastening arrangement to sustain tension forces (F) of up to 5000 N, a plate 3 and an essentially L-shaped profile element 4 of aluminum or steel should have a certain minimum wall thickness. This minimum wall thickness depends partly on the amount of slots, but in the example of Figure 1, wherein five slots are distributed on the plate with even spaces in between over a length of 300 mm and a width of 200 mm, the minimum wall thickness is 2.5 mm.

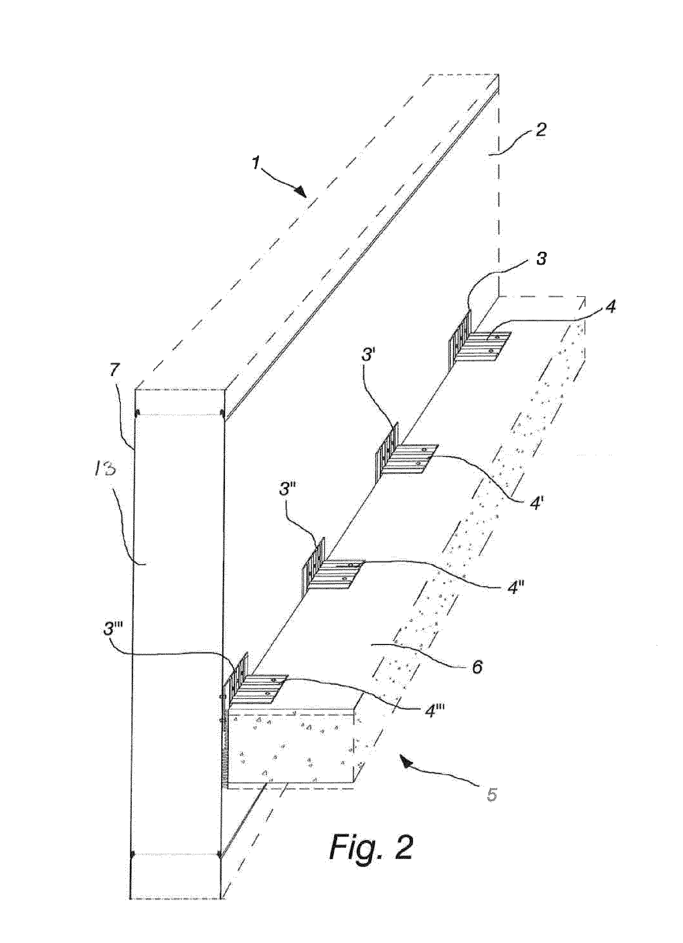

Figure 2 shows how a sandwich panel 1 (joined to a lower and upper sandwich panel by means of tongue-and-groove joints) consisting of, for example, a core of mineral wool 13 between two metal sheets 2, 7 (e.g., aluminum or steel sheets), is fastened in horizontal joists 5 by use of four identical plates 3, 3', 3", 3"' having four slots each being attached to the surface of the "inner" metal sheet 2 on the sandwich panel 1 and four identical essentially L-formed profile elements 4, 4', 4", 4"' having four locking members, the four essentially L-formed profile elements being fastened in the upper surface 6 of the joists 5 my means of screws (and corresponding screw holes in the essentially L-shaped profile elements). In this example, the slots are to their shape so called dovetail slots and the locking members on the essentially L-shaped profile elements 4, 4', 4", 4"' are showing the same shape in cross-section. The plates 3, 3', 3", 3"' have been fastened to the sandwich panel 1 by use of glue or double sided tape on the smooth rear side of the plates (glue/double sided tape not shown). Further, the plates 3, 3', 3", 3"' can between the slots optionally be provided with holes for fastening members such as rivets or screws that additionally can strengthen the joining of the plates to the panel. These fastening members do not, however, need to penetrate the entire panel, but only to a depth directly on the inner side (the side closest to the mineral wool) of the inner metal sheet 2. These fastening members are not necessarily essential as glue or double sided tape is sufficient to withstand horizontal tension forces of 5000 N.

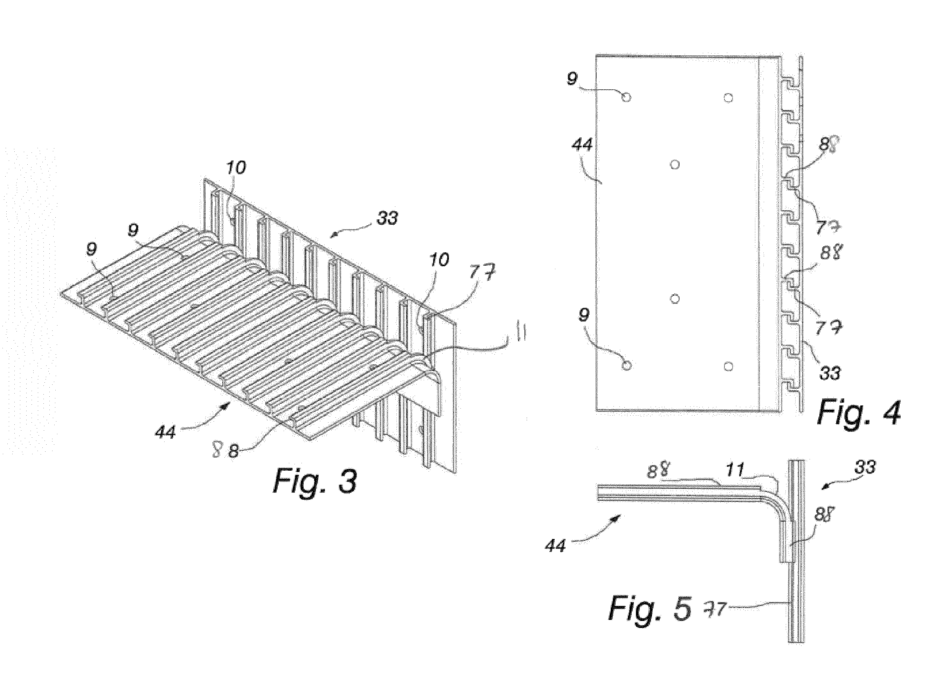

Figure 3 discloses a further embodiment of a fastening arrangement according to the invention, wherein the plate 33 has open slots 77, the cross-section of which in the longitudinal direction of the slots is essentially L-shaped having a shorter and a longer branch. The longer "branch" of the L extends out perpendicular to the main surface of the plate 33 and the shorter "branch" of the L extends out from the longer branch parallel to the main surface of the plate 33. The locking member 8 of the essentially L-shaped profile element 44 shows, with the exception of the bent portion 11 of the profile element 44, a shape identical to the slots 77 on plate 33. Since the slots 77 are open (shaped as essentially L-shaped profile elements), both the plate 33 and the profile element 44 (before bending into L-profile 44) can be manufactured with the same tools. The plate 33 as well as the profile element 44 show screw holes 10 and 9 to enable fastening with screws or corresponding fastening means (not shown) in a sandwich panel and framework, respectively. In the bent portion 11 on the locking member 11 of the profile element 44 is missing the shorter "branch" of the profile element.

From Figure 4, it can be seen how the slots 77 of the plate 33 and the locking members 88 of the profile element 44 are locked against each other. The plate 33 and the profile element 44 are trough the holes 10 and 9 screwed to a sandwich panel and a framework, respectively, such that respective slot 77 and respective locking means 88 goes into one another in such a way that the shorter branch on the L-profile of respective locking member is positioned perpendicularly against the longer branch on the L-profile of respective slot 77 and vice versa. Because the space between the shorter branch of the L-profile on respective locking member 88 and the main surface of the profile element 44 is greater than the thickness of the shorter branch on the L-profile of respective slot 77, there is to some extent (e.g., 5 mm) room for a mutual movement bringing the plate 33 and the profile element 44 together and apart within a plane perpendicular to the main surface of the plate 33 and the main surface of the shorter end of the profile element being attached to the plate 33.

Since the plate 33 is attached to a fastened sandwich panel and the profile element 44 is attached to a fastened framework, the fastening arrangement according to Figure 3 and 4 cannot be detached from each other even if the slots 77 as well as the locking members 88 are open in one direction. Thereby, the fastening arrangement of Figure 3 and 4 enables only that the plate 33 and the L-profile element 44, when the locking members of the profile element are fitted into the slots of the plate, are mutually movable in relation to each other in the longitudinal direction of the slots, whereas their mutual movement perpendicular to the main surface of the plate is restricted to the space between the shorter branch on the L-profile of respective locking means 88 and the main surface of the profile element 44 (the portion parallel to the plate 33).

Figure 5 discloses a schematic side view of the embodiment of Figure 3 and 4. In this figure is shown the fact that the L-profile element 44 in the bent section 11 have a rounded edge between the shorter and longer branch of the L 44.

In Figure 6 is shown in side view how an upright positioned so called multi-span panel 1 (in this case a wall panel) is fastened in a pillar 55 (herein with a square cross section) by use of the fastening arrangement of the invention, in this case a plate 33 and a L-profile element 44, enabling fastening without the use of fastening screws penetrating the sandwich panel 1. Each plate 33 is attached to the sandwich panel 1 on the inner side thereof in part by use of a double sided tape (not shown) on the rear side of the plate and in part by use of rivets (not shown). Each corresponding L-profile element 44 is attached in a corresponding manner as the plate 33 by means of double sided tape (not shown) and screws 12 in the pillar 55. The plate 33 is installed against the panel 1 such that said plate and the shorter branch of the L-profile element 44 are placed between the panel 1 and the pillar 55, whereas the longer branches of the L-profile elements 44 are installed in the two opposite vertical walls of the pillar 55, the surface planes of which walls extending essentially vertically and concurrently essentially perpendicular to the surface planes of the large surfaces of the panel. In figure 6, which only shows a portion of a sandwich panel 1, is shown two pairs of plate 33 with L-profile element 44. The amount of plates 33 with corresponding profile element 44 needed per sandwich panel 1 to be fastened depends on the dimensions of the sandwich panel.

In Figure 7 is shown in cross-section from above how the sandwich panel 1 in the embodiment of Figure 6 is attached to the pillar 55 from both of said opposite vertical walls thereof, essentially at the same height by means of the fastening arrangement of the invention.

A single-span or multi-span panel can be fastened by means of the fastening arrangement according to the invention in vertical (e.g., pillars) as well as horizontal frameworks (e.g. joists) concurrently.

The above described examples are indeed examples and are not to be interpreted as limitations of the hereinafter enclosed claims.

## Claims

1. Fastening arrangement, especially for fastening a sandwich panel (1) to joists (5) or corresponding frame parts, **characterized in that** it comprises at least one plate (3, 3', 3", 3"') having at least one slot (7), the plate being fixedly joinable to the surface (2) of a sandwich panel (1), and at least one profile element (4, 4', 4", 4"') having at least one locking member (8) fitting into the slot (7) of the plate, the profile element being fixedly joinable to joists or corresponding frame part, wherein when the locking members of the profile element have been inserted in the slots of the plate said plate and said profile element are mutually movable in relation to each other in the longitudinal direction of the slots, whereas their mutual movement perpendicularly to the main surface of the plate is restricted or essentially entirely hindered.

2. Fastening arrangement according to claim 1, **characterized in that** the slots are closed or open.

3. Fastening arrangement according to claim 2, **characterized in that** the slots, when being closed, consist of T-slots or dovetail slots.

4. Fastening arrangement according to claim 2, **characterized in that** when the slots are open, the slots as well as the locking members show in the longitudinal direction thereof an essentially L-shaped cross-section.

5. Fastening arrangement according to any one of the claims 1-4, **characterized in that** the plate on the rear side thereof is provided with glue or double-sided tape being protected by a removable protection material.

6. Fastening arrangement according to any one of the claims 1-5, **characterized in that** the profile element is essentially L-shaped.

7. Sandwich panel (1) having at least one layer (13) of thermal insulation material, **characterized in that** on top of one surface of said sandwich panel is fixed at least one plate (3, 3', 3", 3"') having at least one slot (7), said plate being intended for fastening the sandwich panel (1) by means of a profile element (4) having at least one locking member (8) fitting into the slot (7) of the plate, the profile element being fixedly joinable to joists (5) or corresponding frame part by use of screws or corresponding fastening members, wherein said plate and said profile element essentially lock the sandwich panel in place perpendicular to the surface of the sandwich panel due to their mutual movement perpendicularly to the main surface of the plate being restricted or essentially entirely hindered, but allow shifting of the sandwich panel in relation to joists or corresponding frame part in the longitudinal direction of the slots.

8. Sandwich panel according to claim 7, **characterized in that** the slots of the plate are closed or open.

9. Sandwich panel according to claim 8, **characterized in that** the slots of the plate, when being closed, consist of T-slots or dovetail slots.

10. Sandwich panel according to claim 8, **characterized in that** when the slots of the plate are open, the slots as well as the locking members show in the longitudinal direction thereof an essentially L-shaped cross-section.

11. Sandwich panel according to any one of the claims 7-10, **characterized in that** the plate is fixed to the surface of the sandwich panel by means of glue or double-sided tape.

12. Sandwich panel according to any one of the claims 7-11, **characterized in that** the plate additionally is fixed to the surface of the sandwich panel by means of rivets or other corresponding fastening members being able to penetrate the surface layer of the panel.

13. Sandwich panel according to any one of the claims 7-12, **characterized in that** the profile element is essentially L-shaped.

14. Sandwich panel according to any one of the claims 7-13, **characterized in that** the sandwich panel shows a layer of thermal insulation material and that this consists of mineral wool and that this mineral wool layer is positioned between two shells of sheet metal and are fixedly joined thereto.

15. Wall section comprising at least one sandwich panel according to any one of the claims 7-14 being fastened in joists or corresponding frame part, such that each plate through the slots therein is connected to a profile element having at least one locking member fitting into the slots of the plate, the profile element being fixed to joists or corresponding frame part, whereby said plate and said profile element essentially lock the sandwich panel in place perpendicular to the surface of the sandwich panel due to their mutual movement perpendicularly to the main surface of the plate being restricted or essentially completely hindered but allow shifting of the sandwich panel in relation to the framework or corresponding frame part in the longitudinal direction of the slots.

16. Wall section according to claim 15, wherein the slots in their longitudinal direction extend essentially vertically and thereby enable vertical shifting of a floor construction in relation to the wall section.
